# EUROPEAN PATENT APPLICATION

(11) **EP 3 767 965 A1**
(43) Date of publication of application: **20.01.2021**
(21) Application number: 19187357.9
(22) Date of filing: 19.07.2019
(51) Int. Cl.: H04N 21/4363, H04L 29/06

(54) **CLIENT WEB APPLICATION WITH EMBEDDED STREAMING PROTOCOL CONVERTER**

(71) Applicant: THEO Technologies, 3001 Leuven (BE)
(72) Inventor: TIELEMANS, Steven, 3000 Leuven (BE); TIELEMANS, Maarten, 3200 Aarschot (BE); SPEELMANS, Pieter-Jan, 3290 Diest (BE); GOÁS AGUILILLA, Xavier, 3000 Leuven (BE); BUELENS, Mattias, 1745 Opwijk (BE)
(74) Representative: IP HILLS NV

(57) **Abstract**

A computer-implemented method for streaming media (1) from a remote server (200) in a client web browser (300) supporting an operating streaming protocol (30), wherein said method is implemented within a client web application (301) comprised in said client web browser (300) and wherein said method comprises the following steps:
- intercepting data communications (2;3) between said remote server (200) and said client web browser (300) for streaming said media (1) in said client web browser (300); and
- converting said data communications (2;3) into and respectively from said operating streaming protocol (30) when said data communications (2;3) are implemented in a native streaming protocol (20) different from said operating streaming protocol (30) of said client web browser (300), thereby allowing said client web browser (300) to stream said media (1).

## Description

### Technical Field

The present invention generally relates to the streaming media from a server to a client web browser over a communication network. More particularly, the invention relates to a service broker comprised in a client web application of the client web browser and a computer-implemented method performed by the respective service broker.

### Background

File downloading is a process in which the end-user obtains the entire file for the media content before watching or listening to it. On the other hand, streaming media refers to the process of delivering or obtaining media content over a communication network by allowing viewers to start watching media content without the need to completely download the media content beforehand. Live streaming more particularly corresponds to the delivery of media content in real-time over the Internet much as a media content providers broadcasts live media content via live signals. Streaming of digital video and/or digital audio via online streaming platforms such as YouTube, Spotify, Netflix, etc. is widely popular nowadays. It is estimated that by 2020, live streaming will account for more than 80% of all Internet traffic worldwide. A large portion of the Internet traffic today already consists of such media streamed from media services to clients, typically from a media content provider such as a Content Distribution Network, also referred to as CDN, to a large variety of video player applications, such as for example a video player application comprised in a web browser, running on a PC, a tablet, a smartphone, a set-up box, a TV etc..

Several challenges remain when streaming media content to such a large variety of video player applications running on a large plurality of web client browsers. The playback environment imposes significant restrictions in regard to playback capabilities for video player applications. For example, some web browsers do not support popular APIs, such as for example Media Source Extensions or MSE, or such as for example Encrypted Media Extensions or EME, which allow the development of custom video players for certain streaming platforms. For example, some web browsers do not support the Media Source Extensions API which allows JavaScript to send byte streams to media codecs within web browsers that support video and audio.

Particularly, Safari is a web browser implemented in the iOS software operating system developed by Apple Inc. which does not support popular APIs that allow the development of custom video players. For live media content, Safari on iOS supports the HTTP Live Streaming protocol, also known as HLS, which is natively implemented within the Safari browser. HLS is an HTTP-based adaptive bitrate streaming communications protocol implemented by Apple Inc. as part of its QuickTime, Safari, OS X, and iOS software. HLS works by breaking the overall stream into a sequence of small HTTP-based file downloads, each download representing one short chunk of an overall potentially unbounded media stream comprising for example audio and video.

As a result, media content providers wishing to deliver live media content to Safari on iOS must use the HLS implementation for playback within the iOS environment. In other words, all media content providers are forced to use the HLS protocol natively implemented within Safari to deliver media content to the iOS environment. This increases the complexity and the cost involved with the delivery of media content as media content providers must deliver the media content in a plurality of streaming protocols over the internet.

Having to only rely on the one or more streaming protocols natively implemented within a web browser therefore severely limits streaming services. First, media content providers cannot benefit from capabilities of other streaming protocols which are different from the streaming protocol natively implemented within the web browser. Also, as media content providers must deliver media content using specific streaming protocols on specific platforms, the complexity of delivering media content will drastically increase as multiple streaming protocols must coexist and must be supported in parallel in the streaming pipelines of the media content providers and must be supported by the CDNs.

Additionally, clients of the media content must interact with one or more streaming protocols natively implemented within a web browser instead of being able to bring their own implementation. This results in the need to re-implement certain business rules and integrations with other services such as DRM, analytics or advertisement services.

Streaming media content to video player applications therefore remains challenging, especially in terms of compatibility with some web browsers supporting only natively implemented streaming protocols.

### Summary

It is an objective of the present invention to disclose a service worker and a computer-implemented method that overcome the above identified shortcomings of existing solutions. More particularly, it is an objective to disclose a service worker and a computer-implemented method which allow streaming media within media streaming platforms with limited streaming support.

The scope of protection sought for the various embodiments of the invention is set out by the independent claims. The embodiments and features described in this specification that do not fall within the scope of the independent claims, if any, are to be interpreted as examples useful for understanding various embodiments of the invention.

According to a first aspect of the present disclosure, the above defined objectives are realized by a computer-implemented method for streaming media from a remote server in a client web browser supporting an operating streaming protocol, wherein the method is implemented within a client web application comprised in the client web browser and wherein the method comprises the following steps:
- intercepting data communications between the remote server and the client web browser for streaming the media in the client web browser; and
- converting the data communications into and respectively from the operating streaming protocol when the data communications are implemented in a native streaming protocol different from the operating streaming protocol of the client web browser, thereby allowing the client web browser to stream the media.

The computer-implemented method according to the present invention solves the mismatch or incompatibility between the native streaming protocol in which the media to be streamed is implemented and the operating streaming protocol of the client web browser. In other words, an alternative streaming protocol, different from the operating streaming protocol of the client web browser, can then be used for media streaming platforms with limited streaming support in a completely transparent manner. Indeed, the client web browser does not receive data communications implemented in a native streaming protocol different from the operating streaming protocol of the client web browser but instead receives data communications which are implemented in an operating streaming protocol of the client web browser. The client web browser further generates data communications which are implemented in an operating streaming protocol of the client web browser without taking other possible streaming protocols into account when requesting streaming of the media. Respectively, the remote server does not receive data communications implemented in an operating streaming protocol of the client web browser but instead receives data communications which are implemented in one or more of its own native streaming protocol different from an operating streaming protocol of the client web browser. The remote server further generates data communications which are implemented in one or more of its own native streaming protocol without taking an operating streaming protocol of the client web browser into account when receiving a request to stream the media. As a result, business logic can be built on top of the computer-implemented method, which can then be used for data gathering on the data communications exchanged between the remote server and one or more client web applications comprised in one or more client web browsers. Additionally, as the computer-implemented method still leverages the native playback capabilities of the remote server, certain capabilities such as DRM playback are also available. This way, it is possible with the computer-implemented method according to the present invention to fully mediate between a remote server and a client web browser in a fully transparent manner.

The computer-implemented method according to the present invention allows streaming media over a communication network such as the internet, from a remote media service, for example from a remote server, to a client, and more particularly to a client web browser supporting an operating streaming protocol. This computer-implemented method fulfils data communications between the remote server and the client web browser by transforming, i.e. converting the data communications from the client web browser implemented in an operating streaming protocol to data communications implemented in a native streaming protocol different from the operating streaming protocol of the client web browser, and by further transforming the data communications from the remote server implemented in a native streaming protocol different from an operating streaming protocol of the client web browser to data communications implemented in an operating streaming protocol of the client web browser. In other words, the computer-implemented method mediates data communications between the remote server and the client web browser by fulfilling a streaming protocol transformation to issue data communications in line with the operating streaming protocol of the client web browser and to transform data communications from the remote server in response to the data communications generated by the client web browser into data communications applicable for the operating streaming protocol of the client web browser.

The computer-implemented method according to the present invention is preferably implemented within a client web application comprised in the client web browser. A client web application, or web application, or web app, is a client-server computer program which the client runs in a web browser. For example, common web applications for example include webmail, online retail sales, etc.. There exist different kinds of web applications: responsive web design can be used to design a web application - whether a conventional website or a single-page application viewable on small screens and work well with touchscreens for use in a tablet or a smartphone; progressive web applications are web applications that load like regular web pages or websites but can offer the user functionality such as working offline, push notifications, and device hardware access traditionally available only to native mobile applications; native apps or "mobile apps" run directly on a mobile device, just as a conventional software application runs directly on a desktop computer, without a web browser, and potentially without the need for Internet connectivity; hybrid apps embed a mobile web site inside a native app, possibly using a hybrid framework.

The media received by a client is a combination of ordered still pictures or frames that are decoded or decompressed and played one after the other within the client web browser. To this respect, the client web browser is implemented in a media client, or client device, which may be any device capable of receiving a digital representation of such media over a communication network and capable of decoding the representation into a sequence of frames that can be displayed on a screen to a user. Examples of client devices that are suitable as a media client are desktop and laptop computers, smartphones, tablets, setup boxes and TVs. A media client may also refer to a media player application running on any of such devices. Streaming of media refers to the concept that the client web browser can request the media from a remote media service such as for example a remote server and start the playback of the media upon receiving the first frames without having received all the frames of the compete stream of media. A streaming service is then a remote service that can provide such media streaming upon request of the client web browser to the remote server over a communication network, for example over the Internet, over a Wide Area Network (WAN) or a Local Area Network (LAN).

The steps of the computer-implemented method according to the present invention may be performed within a browser application such as for example Google Chrome, Mozilla Firefox, Internet Explorer, Safari, Microsoft Edge, Opera, etc.. The steps may also be performed within any computer application that uses a browser engine such as for example Gecko, WebKit, Blink, Trident and EdgeHTML. Such browser application or application having a browser engine may be provided on capable devices such as for example a desktop or laptop computer, tablet device, smartphone, television, and a digital media player (DMP). The performed steps may further be embedded within the application code of the browser engine thereby providing standard support for the described streaming. When a browser or browser engine provides such standard support, then it is sufficient to provide a single reference of the media content to the media client. For example, in a browser application, this reference may be provided to the media client in the form of a URL on a web page. Alternatively, all or part of the steps may be provided for execution within the media client, i.e. the program code for performing these steps are loaded from an external location. For example, in a browser application, the necessary program code for executing the step may be provided within the downloaded webpage or referred to from within the webpage. The program code may further be formatted in a standard format such as JavaScript, a high-level, interpreted programming language that conforms to the ECMAScript specification.

Data communications are for example one or more requests from the client web application to stream media from one or more remote servers. Data communications are for example one or more responses generated by one or more remote servers to one or more requests of one or more client web applications for media.

According to an optional aspect of the disclosure, the step of intercepting the data communications comprises intercepting a request generated in the operating streaming protocol to stream the media in the client web browser; and the step of converting the data communications comprises converting the request into a native streaming protocol different from the operating streaming protocol of the client web browser.

The computer-implemented method further comprises the steps of intercepting and handling data communications between a remote server from which media must be streamed and the client web browser. In other words, the computer-implemented method further comprises the steps of fetching and processing the data communications exchanged between a remote server from which media must be streamed and the client web browser. A remote server does not directly receive a request generated in the operating streaming protocol to stream the media in the client web browser. The remote server receives a converted request which was generated from the request converted into a native streaming protocol different from the operating streaming protocol of the client web browser. This way, the conversion or transformation or translation of the request from one streaming protocol into a different streaming protocol is fully transparent to the client web browser and to the remote server.

According to an optional aspect of the invention, the method further comprises the step of transmitting the request converted into a native streaming protocol different from the operating streaming protocol of the client web browser to the remote server.

According to an optional aspect of the disclosure, the step of intercepting the data communications comprises generating a response to the request to stream the media from the remote server in the client web browser; and the step of converting the data communications comprises converting the response into the operating streaming protocol of the client web browser when the response is implemented in a native streaming protocol different from the operating streaming protocol of the client web browser, thereby allowing the media to be streamed in the client web browser.

The computer-implemented method further comprises the steps of generating and/or handling data communications in response to a request to stream media from the remote server in the client web browser. In other words, the computer-implemented method further comprises the steps of fetching and/or emulating a response of one or more remote servers to the request to stream media from the one or more remote server in the client web browser. The computer-implemented method further comprises the step of converting the response into an operating streaming protocol of the client web browser when the response is implemented in a native streaming protocol different from the operating streaming protocol of the client web browser. In other words, the web client browser does not directly receive a response of a remote server in a native streaming protocol, but instead receives a response converted from a native streaming protocol different from an operating streaming protocol of the client web browser into an operating streaming protocol of the client web browser. This way, the conversion or transformation or translation of the response from one streaming protocol into a different streaming protocol is fully transparent to the client web browser and to the remote server. This way, the media can be streamed in a client web browser even if the data communications received from one or more remote servers were generated in a native streaming protocol different from the operating streaming protocol of the client web browser. Alternatively, the computer-implemented method further comprises the step of generating and/or handling data communications in response to a request to stream media from the remote server in the client web browser by fetching the response from a cache.

According to an optional aspect of the invention, the method further comprises the step of transmitting to the client web browser the response converted into the operating streaming protocol of the client web browser when the response is implemented in a native streaming protocol different from the operating streaming protocol of the client web browser.

According to a second aspect of the disclosure, there is provided a service worker for streaming media from a remote server in a client web browser supporting an operating streaming protocol, wherein the service worker is supported by a client web application of the client web browser and wherein the service worker is configured to:
- intercept data communications between the remote server and the client web browser for streaming the media in the client web browser; and
- convert the data communications into and respectively from the operating streaming protocol when the data communications are implemented in a native streaming protocol different from the operating streaming protocol of the client web browser, thereby allowing the client web browser to stream the media.

The service worker according to the present invention solves the mismatch or incompatibility between the native streaming protocol in which the media to be streamed is implemented and the operating streaming protocol of the client web browser. In other words, an alternative streaming protocol, different from the operating streaming protocol of the client web browser, can then be used for media streaming platforms with limited streaming support in a completely transparent manner. Indeed, the client web browser does not receive data communications implemented in a native streaming protocol different from the operating streaming protocol of the client web browser but instead receives data communications which are implemented in an operating streaming protocol of the client web browser. The client web browser further generates data communications which are implemented in an operating streaming protocol of the client web browser without taking other possible streaming protocols into account when requesting streaming of the media. Respectively, the remote server does not receive data communications implemented in an operating streaming protocol of the client web browser but instead receives data communications which are implemented in one or more of its own native streaming protocol different from an operating streaming protocol of the client web browser. The remote server further generates data communications which are implemented in one or more of its own native streaming protocol without taking an operating streaming protocol of the client web browser into account when receiving a request to stream the media. As a result, business logic can be built on top of the computer-implemented method, which can then be used for data gathering on the data communications exchanged between the remote server and one or more client web applications comprised in one or more client web browsers. Additionally, as the computer-implemented method still leverages the native playback capabilities of the remote server, certain capabilities such as DRM playback are also available. This way, it is possible with the computer-implemented method according to the present invention to fully mediate between a remote server and a client web browser in a fully transparent manner.

A service worker is for example a script that a client web browser runs in the background, separate from a web page. For example, service workers are nowadays used to for features like push notifications and background synchronization. Optionally, the service worker further comprises a cache configured to manage a cache of requests and/or responses. A service worker is for example a JavaScript Worker, which can communicate with web pages it controls by responding to messages sent via for example the postMessage interface. A service worker allows controlling how requests from one or more web client browsers and the corresponding responses are handled. A service worker is intercepting data communications between a remote server and a client web browser when data communications are exchanged between the remote server and the client web browser. In other words, a service worker has a lifecycle that is completely separate from a web page of the client web browser.

According to an optional aspect of the disclosure, the service worker is configured to:
- intercept a request generated in the operating streaming protocol to stream the media in the client web browser; and
- convert the request into a native streaming protocol different from the operating streaming protocol of the client web browser.

The service worker is further configured to intercept and handle data communications between a remote server from which media must be streamed and the client web browser. In other words, the service worker is further configured to fetch and process the data communications exchanged between a remote server from which media must be streamed and the client web browser. A remote server does not directly receive a request generated in the operating streaming protocol to stream the media in the client web browser. On the other hand, the service worker is configured to directly receive the request and is further configured to process the request by converting the request when the request is not implemented in a native streaming protocol handled by the remote server. The service worker is further configured to transmit the converted request to the remote server. The remote server then receives a converted request which was generated by the service worker from the request converted into a native streaming protocol different from the operating streaming protocol of the client web browser. This way, the conversion or transformation or translation of the request from one streaming protocol into a different streaming protocol is fully transparent to the client web browser and to the remote server.

According to an optional aspect of the invention, the service worker is further configured to transmit the request converted into a native streaming protocol different from the operating streaming protocol of the client web browser to the remote server.

According to an optional aspect of the disclosure, the service worker is configured to:
- generate a response to the request to stream the media from the remote server in the client web browser; and
- convert the response into the operating streaming protocol of the client web browser when the response is implemented in a native streaming protocol different from the operating streaming protocol of the client web browser, thereby allowing the media to be streamed by the client web browser.

The service worker is further configured to generate and/or handle data communications in response to a request to stream media from the remote server in the client web browser. In other words, the service worker is further configured to fetch and/or emulate a response of one or more remote servers to the request to stream media from the one or more remote server in the client web browser. The service worker is then further configured to convert the response into an operating streaming protocol of the client web browser when the response is implemented in a native streaming protocol different from the operating streaming protocol of the client web browser. In other words, the web client browser does not directly receive a response of a remote server in a native streaming protocol, but instead receives a response converted by the service worker from a native streaming protocol different from an operating streaming protocol of the client web browser into an operating streaming protocol of the client web browser. This way, the conversion or transformation or translation of the response from one streaming protocol into a different streaming protocol is fully transparent to the client web browser and to the remote server. This way, the media can be streamed in a client web browser even if the data communications received from one or more remote servers were generated in a native streaming protocol different from the operating streaming protocol of the client web browser. Alternatively, the service worker further comprises a cache and can be further configured to fetch the response to the request to stream media from the one or more remote server in the client web browser from the cache.

According to an optional aspect of the invention, the service worker is further configured to transmit to the client web browser the response converted into the operating streaming protocol of the client web browser when the response is implemented in a native streaming protocol different from the operating streaming protocol of the client web browser.

According to an optional aspect of the disclosure, the operating streaming protocol is a HTTP Live Streaming protocol.

An operating streaming protocol is for example a HTTP Live Streaming protocol. The HTTP Live Streaming protocol is supported by Safari developed by Apple Inc. Based on standard HTTP transactions, HTTP Live Streaming can traverse any firewall that lets through standard HTTP traffic, unlike UDP-based protocols such as RTP. This also allows content to be offered from conventional HTTP servers and delivered over widely available HTTP-based content delivery networks.

According to an optional aspect of the disclosure, the native streaming protocol is for example one or more of the following: MPEG DASH, Adobe HTTP HDS Dynamic Streaming, Smooth Streaming from Microsoft, Real-Time Messaging Protocol or RTMP.

A native streaming protocol is for example a HTML5 streaming protocol. For example, a native streaming protocol is for example MPEG DASH which is an adaptive bitrate streaming technique that enables high quality streaming of media content over the Internet delivered from conventional HTTP web servers.

According to an optional aspect of the disclosure, the service worker is comprised in the client web browser.

This way, the service worker may be directly implemented within a web page of the client web browser.

According to a third aspect of the disclosure, the disclosure relates to a media client comprising at least one processor and at least one memory including computer program code, the at least one memory and computer program code configured to, with the at least one processor, cause the controller to perform the method according to the first example aspect.

According to a fourth aspect of the disclosure, the disclosure relates to a computer program product comprising computer-executable instructions for causing a media client to perform at least the method according to the first aspect of the disclosure.

According to a fifth aspect of the disclosure, the disclosure relates to a computer readable storage medium comprising computer-executable instructions for performing the method according to the first aspect of the disclosure when the program is run on a computer.

### Brief Description of the Drawings

Fig. 1 schematically illustrates an embodiment of a service worker according to the present invention.
Fig. 2 schematically illustrates an embodiment of the steps of a method according to the present invention.
Fig. 3 shows an example embodiment of a suitable computing system for performing one or several steps in embodiments of the invention.

### Detailed Description of Embodiment(s)

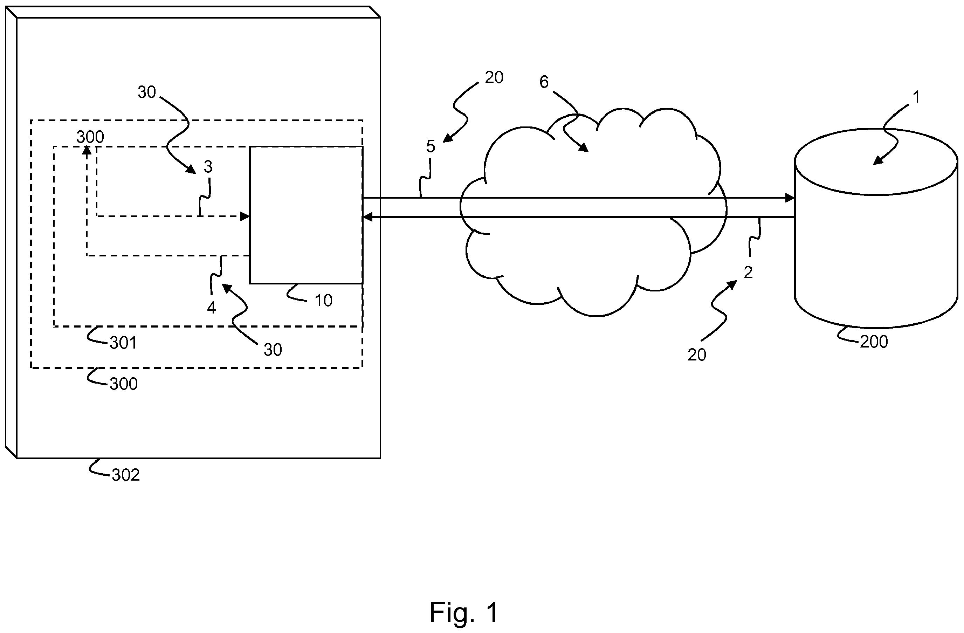

According to an embodiment shown in Fig. 1, a service worker 10 is supported by a client web application 301 comprised in a client web browser 300 running on a client device 302. The client device 302 may be a computer, a tablet, a smartphone or any other computing device provided with internet connectivity. Media 1 such as for example audio and/or video is stored and/or available on a remote server 200. The client web browser 300 supports an operating streaming protocol 30. The client web browser 300 is configured to stream media 1 from the remote server 200 over a communication network 6 such as for example the internet. The service worker 10 intercepts data communications 2;3 between the remote server 200 and the client web browser 300 for streaming the media 1 in the client web browser 300. The service worker 10 further converts the data communications 2;3 into and respectively from the operating streaming protocol 30 when the data communications 2;3 are implemented in a native streaming protocol 20 different from the operating streaming protocol 30 of the client web browser 300, thereby allowing the media 1 to be streamed in the client web browser 300. More particularly, the service worker 10 intercepts a request 3 generated in the operating streaming protocol 30 to stream the media 1 in the client web browser 300. The service worker 10 then converts the request 3 generated in the operating streaming protocol 30 into a native streaming protocol 20 different from the operating streaming protocol 30 of the client web browser 300 when the request 3 is not generated in a native streaming protocol that can be interpreted by the remote server 200, thereby generating a converted request 5 for streaming the media 1. The service worker 10 then transmits the converted request 5 to the remote server 200 on which the media 1 is stored. The converted request 5 is implemented in a native streaming protocol 20 which can be interpreted by the remote server 200. A response 2 to the converted request 5 to stream the media 1 from the remote server 200 in the client web browser 300 is generated. The service worker 10 intercepts the response 2 to the converted request 5 to stream the media 1 from the remote server 200 in the client web browser 300. The service worker 10 converts the response 2 into the operating streaming protocol 30 of the client web browser 300 when the response 2 is implemented in a native streaming protocol 20 different from the operating streaming protocol 30 of the client web browser 300, thereby generating a converted response 4. The server worker 10 then transmits the converted response 4 to the client web browser 300, thereby allowing the media 1 to be streamed in the client web browser 300. An operating streaming protocol of the client web browser 300 is for example a HTTP Live Streaming protocol. A native streaming protocol is for example one or more of the following: MPEG DASH, Adobe HTTP HDS Dynamic Streaming, Smooth Streaming from Microsoft, Real-Time Messaging Protocol or RTMP.

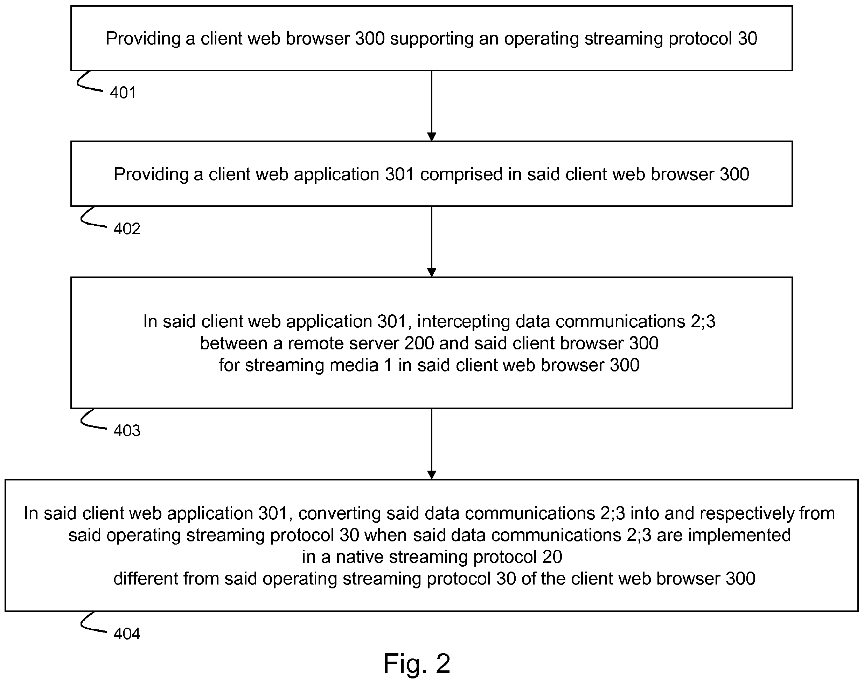

According to an embodiment of the method steps illustrated in Fig. 2, the method comprises step 401 of providing a client web browser 300 supporting an operating streaming protocol 30. An operating streaming protocol of the client web browser 300 is for example a HTTP Live Streaming protocol. The method further comprises step 402 which comprises providing a client web application 301 comprised in the client web browser 300. In step 403, the method further comprises intercepting, in the client web application 301, data communications 2;3 between a remote server 200 on which media 1 is stored or available and the client browser 300 for streaming media 1 in the client web browser 300. In step 404, the method further comprises converting, in the client web application 301, the data communications 2;3 into and respectively from the operating streaming protocol 30 when the data communications 2;3 are implemented in a native streaming protocol 20 different from the operating streaming protocol 30 of the client web browser 300. A native streaming protocol is for example one or more of the following: MPEG DASH, Adobe HTTP HDS Dynamic Streaming, Smooth Streaming from Microsoft, Real-Time Messaging Protocol or RTMP. More particularly, step 403 comprises intercepting a request 3 generated in the operating streaming protocol 30 to stream the media 1 in the client web browser 300. In this case, step 404 comprises converting the request 3 into a native streaming protocol 20 different from the operating streaming protocol of the client web browser 300, wherein the native streaming protocol 20 can be interpreted by the remote server 200, thereby generating a converted request to stream the media 1 in the client web browser 300 and further comprises transmitting the converted request to the remote server 200. More particularly, step 403 comprises intercepting a response 2 to the request 3 to stream the media 1 in the client web browser 300, and step 404 comprises converting the response 2 into the operating streaming protocol 30 of the client web browser 300 when the response 2 is implemented in a native streaming protocol 20 different from the operating streaming protocol of the client web browser 300, thereby generating a converted response to the request 3 to stream the media 1 in the client web browser 300 and further comprises transmitting the converted response to the client web browser, thereby allowing the media 1 to be streamed in the client web browser 300.

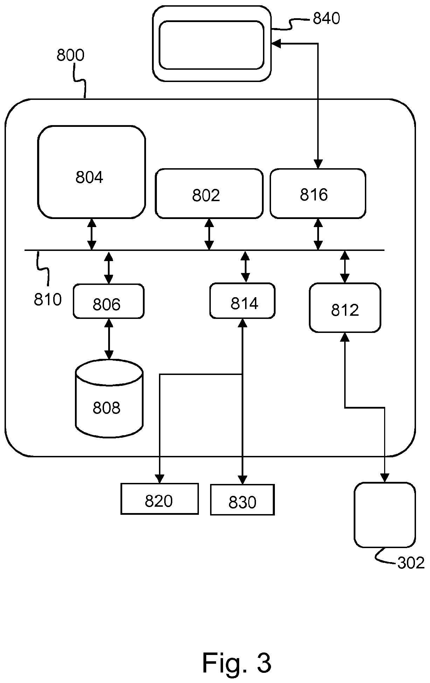

Fig. 3 shows a suitable computing system 800 enabling the performance of the described steps according to the various embodiments. Computing system 800 may in general be formed as a suitable general-purpose computer and comprise a bus 810, a processor 802, a local memory 804, one or more optional input interfaces 814, one or more optional output interfaces 816, a communication interface 812, a storage element interface 806, and one or more storage elements 808. Bus 810 may comprise one or more conductors that permit communication among the components of the computing system 800. Processor 802 may include any type of conventional processor or microprocessor that interprets and executes programming instructions. Local memory 804 may include a random-access memory (RAM) or another type of dynamic storage device that stores information and instructions for execution by processor 802 and/or a read only memory (ROM) or another type of static storage device that stores static information and instructions for use by processor 802. Input interface 814 may comprise one or more conventional mechanisms that permit an operator or user to input information to the computing device 800, such as a keyboard 820, a mouse 830, a pen, voice recognition and/or biometric mechanisms, a camera, etc. Output interface 816 may comprise one or more conventional mechanisms that output information to the operator or user, such as a display 840, etc. Communication interface 812 may comprise any transceiver-like mechanism such as for example one or more Ethernet interfaces that enables computing system 800 to communicate with other devices and/or systems, for example with other computing devices 302. The communication interface 812 of computing system 800 may be connected to such another computing system by means of a local area network (LAN) or a wide area network (WAN) such as for example the internet. Storage element interface 806 may comprise a storage interface such as for example a Serial Advanced Technology Attachment (SATA) interface or a Small Computer System Interface (SCSI) for connecting bus 810 to one or more storage elements 808, such as one or more local disks, for example SATA disk drives, and control the reading and writing of data to and/or from these storage elements 808. Although the storage element(s) 808 above is/are described as a local disk, in general any other suitable computer-readable media such as a removable magnetic disk, optical storage media such as a CD or DVD, -ROM disk, solid state drives, flash memory cards, ... could be used. Computing system 500 could thus correspond to the circuitry for executing the steps of the media client 302.

As used in this application, the term "circuitry" may refer to one or more or all of the following:
(a) hardware-only circuit implementations such as implementations in only analog and/or digital circuitry and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and/or processor(s), such as microprocessor(s) or a portion of a microprocessor(s), that requires software (e.g. firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in a server, a cellular network device, or other computing or network device.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A computer-implemented method for streaming media (1) from a remote server (200) in a client web browser (300) supporting an operating streaming protocol (30), wherein said method is implemented within a client web application (301) comprised in said client web browser (300) and wherein said method comprises the following steps:
- intercepting data communications (2;3) between said remote server (200) and said client web browser (300) for streaming said media (1) in said client web browser (300); and
- converting said data communications (2;3) into and respectively from said operating streaming protocol (30) when said data communications (2;3) are implemented in a native streaming protocol (20) different from said operating streaming protocol (30) of said client web browser (300), thereby allowing said client web browser (300) to stream said media (1).

2. A computer-implemented method according to claim 1, wherein:
- said step of intercepting said data communications (2;3) comprises intercepting a request (3) generated in said operating streaming protocol (30) to stream said media (1) in said client web browser (300); and
- said step of converting said data communications (2;3) comprises converting said request (3) into a native streaming protocol (20) different from said operating streaming protocol (30) of said client web browser (300).

3. A computer-implemented method according to claim 1, wherein:
- said step of intercepting said data communications (2;3) comprises generating a response (2) to said request (3) to stream said media (1) from said remote server (200) in said client web browser (300); and
- said step of converting said data communications (2;3) corresponds to converting said response (2) into said operating streaming protocol (30) of said client web browser (300) when said response (2) is implemented in a native streaming protocol (20) different from said operating streaming protocol (30) of said client web browser (300), thereby allowing said media (1) to be streamed in said client web browser (300).

4. A computer-implemented method according to any of the preceding claims, wherein said operating streaming protocol (30) is the HTTP Live Streaming protocol.

5. A service worker (10) for streaming media (1) from a remote server (200) in a client web browser (300) supporting an operating streaming protocol (30), wherein said service worker (10) is supported by a client web application (301) of said client web browser (300) and wherein said service worker (10) is configured to:
- intercept data communications (2;3) between said remote server (200) and said client web browser (300) for streaming said media (1) in said client web browser (300); and
- convert said data communications (2;3) into and respectively from said operating streaming protocol (30) when said data communications (2;3) are implemented in a native streaming protocol (20) different from said operating streaming protocol (30) of said client web browser (300), thereby allowing said client web browser (300) to stream said media (1).

6. A media client comprising at least one processor (802) and at least one memory (804) including computer program code, the at least one memory and computer program code configured to, with the at least one processor, cause the controller to perform the method according to any of claim 1 to 4.

7. A computer program product comprising computer-executable instructions for causing a media client to perform at least the method according to any of claim 1 to 4.

8. A computer readable storage medium comprising computer-executable instructions for performing the method according to any of claims 1 to 4 when the program is run on a computer.
